# EUROPÄISCHE PATENTANMELDUNG

(11) **EP 0 640 453 A1**
(43) Veröffentlichungstag der Anmeldung: **01.03.1995**
(21) Anmeldenummer: 94113323.3
(22) Anmeldetag: 25.08.1994
(51) Int. Cl.: B28D 1/30, B23Q 27/00

(54) **Vorrichtung und Verfahren zum Nacharbeiten eines Werkstücks**

(30) Priorität: 25.08.1993 DE 4328594
(71) Anmelder: Pfeiffer Maschinenfabrik Ettlingen GmbH, D-76275 Ettlingen (DE)
(72) Erfinder:
(74) Vertreter: Patentanwälte Leinweber & Zimmermann

(57) **Zusammenfassung**

Es werden eine Vorrichtung und ein Verfahren zum Nacharbeiten eines Werkstücks, insbesondere eines Betonrohres, beschrieben. Das Nacharbeiten erfolgt unter Anlage einer flexiblen Struktur mit mindestens dem halben Umfang des Werkstücks entsprechender Länge an dem Werkstück, wobei ein Bearbeitungswerkzeug in konstantem Abstand von der Mitte zwischen zwei bei Anlage der flexiblen Struktur an dem Werkstück einander gegenüberliegenden Punkten an der flexiblen Struktur gehalten wird.

## Beschreibung

Die Erfindung betrifft eine Vorrichtung und ein Verfahren zum Nacharbeiten eines Werkstücks, insbesondere eines Betonrohres.

Insbesondere bei der Herstellung von Betonrohren stellt sich das Problem, daß die Rohre unrund werden, weil sie nach dem sogenannten Sofort-Entschalverfahren hergestellt werden. Dabei nehmen die zunächst runden Rohre im wesentlichen eine ovale Form an, das heißt eine Halbachse verkürzt sich, während die dazu senkrecht stehende Halbachse sich verlängert. Insbesondere an den Spitzenden ist eine solche Verformung unerwünscht, da bei zu großen Abweichungen keine einwandfreie Rohrverbindung herstellbar ist.

Zur Lösung dieses Problems ist vorgeschlagen worden, die beschriebene Deformation durch die Verwendung von Innen- bzw. Außenstützringen auf ein tolerables Maß zu beschränken. Die Verwendung solcher Stützringe erfordert jedoch einen erheblichen Investitionsaufwand für die Stützringe selbst sowie einen ebenfalls nicht unbedeutenden Aufwand für das Aufsetzen und Abnehmen der Ringe.

Aus dem DE-92 05 382 U1 ist eine Vorrichtung zum Bearbeiten von kreisrunden Rohren aus Beton und Stahlbeton bekannt. Dabei wird ein Fräser über zwei symmetrisch zum Fräser vor und hinter diesem angeordnete Stützrollen abgestützt, wobei der Winkel der Anordnung der Stützrollen zum Zentrum des zu bearbeitenden Rohres ca. 90°C beträgt. Mithin muß zur Einstellung der Stützrollen bezüglich des Trägers das Zentrum des zu bearbeitenden Rohres ermittelt werden.

Aufgabe der Erfindung ist es, eine Vorrichtung sowie ein Verfahren zum Nacharbeiten eines Werkstücks, insbesondere eines Betonrohres, anzugeben, die besonders kostengünstig und einfach zu handhaben bzw. das mit wenig Arbeits- und Zeitaufwand durchzuführen ist. Insbesondere soll das Nacharbeiten des Werkstücks möglich sein, ohne daß vorher das Zentrum des Werkstücks ermittelt werden muß.

Erfindungsgemäß wird die gestellte Aufgabe gelöst durch eine Vorrichtung zum Nacharbeiten eines Werkstücks, insbesondere eines Betonrohres, mit
- einer als flexible Struktur ausgebildeten Einrichtung mit mindestens dem halben Umfang des Werkstücks entsprechender Länge zum Anlegen an das Werkstück,
- einem Bearbeitungswerkzeug und
- einer Halteeinrichtung für das Bearbeitungswerkzeug, die an der als flexible Struktur ausgebildeten Einrichtung bei deren Anlage an dem Werkstück an zwei einander im wesentlichen gegenüberliegenden Punkten angreift, derart, daß diese entlang der Mantelfläche voneinander einen dem halben Umfang entsprechenden Abstand haben, zum Halten des Bearbeitungswerkzeugs in im wesentlichen konstantem Abstand von der Mitte zwischen den Angriffspunkten.

Ferner dient zur Lösung der Aufgabe ein Verfahren zum Nacharbeiten eines Werkstücks, insbesondere eines Betonrohres, bei dem
- eine als flexible Struktur ausgebildete Einrichtung mit mindestens dem halben Umfang des Werkstücks entsprechender Länge an das Werkstück angelegt wird,
- ein Bearbeitungswerkzeug in im wesentlichen konstantem Abstand von der Mitte zwischen zwei bei Anlage an dem Werkstück einander gegenüberliegenden Punkten an der als flexible Struktur ausgebildeten Einrichtung mit dem Werkstück in Eingriff gebracht wird, wobei die gegenüberliegenden Punkte entlang der Mantelfläche voneinander einen dem halben Umfang entsprechenden Abstand haben, und
- eine Relativbewegung zwischen dem Werkstück und dem Bearbeitungswerkzeug erzeugt wird.

Die Erfindung macht sich die Tatsache zunutze, daß bei einem Oval (Ellipse), und insbesondere bei einem einen großen und einen kleinen Halbmesser aufweisenden vormals runden, jedoch aufgrund von Randbedingungen unrund gewordenen (Beton-)Rohr zwei auf der Mantelfläche einander gegenüberliegende Punkte jeweils voneinander einen dem halben Umfang entsprechenden Abstand haben, wobei der Abstand entlang der Mantelfläche gemessen ist. Legt man also eine flexible Struktur um die Mantelfläche des zu bearbeitenden Werkstücks und dreht man das Werkstück innerhalb der flexiblen Struktur, wobei die Anlage jeweils erhalten bleibt, so bleiben zwei einander gegenüberliegende Punkte auf der flexiblen Struktur immer in derjenigen Ebene, die durch die beiden Punkte geht und parallel zur Drehachse des Werkstücks liegt. Hält man dann weiter das Bearbeitungswerkzeug während der Drehung in konstantem Abstand von den genannten Punkten, so wird es auch von der genannten Drehachse des Werkstücks immer den gleichen Abstand halten. Dadurch kann dem Werkstück im Bereich der Wirkung des Werkzeugs eine runde Form gegeben werden. Mithin werden erfahrungsgemäß die geometrischen Gesetzmäßigkeiten der Elypse ausgenützt.

Erfindungsgemäß ist es nicht erforderlich, zum Bearbeiten des Werkstücks dessen Achse zu ermitteln und es um die genannte Achse zu drehen, wie es nach dem DE 92 05 382 41 der Fall ist. Im übrigen ist ein "Einspannen" des Werkstücks - wie dies beim Drehen und Drechseln üblich ist - insbesondere im Fall eines Betonrohres im Hinblick auf das beträchtliche Gewicht des Betonrohres nur sehr schwer möglich.

Die erfindungsgemäße Vorrichtung ist problemlos in eine Rohrfertigungsanlage integrierbar.

Erfindungsgemäß kann die als flexible Struktur ausgebildete Einrichtung gelenkig miteinander verbundene Glieder beinhalten. Je größer die Anzahl der Glieder pro Längeneinheit, um so genauer kann die flexible Struktur der Außenkontur des Werkstücks bei der Anlage folgen, um so genauer wird demnach auch die herzustellende runde Form.

Die Glieder können bogenförmige oder gerade Arme sein.

Erfindungsgemäß bevorzugt ist es, daß die als flexible Struktur ausgebildete Einrichtung bei Anlage an dem Werkstück das Werkstück zu 160° bis 190° umschlingt.

Zur Verminderung der Reibung zwischen der flexiblen Struktur und dem Werkstück können Rollen zum Abstützen der als flexible Struktur ausgebildeten Einrichtung an dem Werkstück vorgesehen sein.

Die Halteeinrichtung kann mindestens einen verschwenkbaren Lenker aufweisen.

Insbesondere zur Sicherstellung einer dichten Anlage der als flexible Struktur ausgebildeten Einrichtung kann eine Einrichtung zum Vorspannen der flexiblen Struktur in Richtung eines Schließens um das Werkstück vorgesehen sein.

Insbesondere zur Einstellung des durch die Nacharbeitung erhaltenen Radius kann vorgesehen sein, daß das Bearbeitungswerkzeug relativ zur Halteeinrichtung verstellbar ist.

Das Bearbeitungswerkzeug kann ein Fräser sein.

Erfindungsgemäß bevorzugt ist eine Antriebseinrichtung zur Erzeugung einer Relativbewegung zwischen dem Bearbeitungswerkzeug und dem Werkstück.

Erfindungsgemäß bevorzugt ist es, daß die Bearbeitungsgeschwindigkeit optimiert ist. Dazu kann vorgesehen sein, daß die Geschwindigkeit der Bearbeitung des Werkstücks mit dem Bearbeitungswerkzeug bei steigender Leistungsaufnahme des Bearbeitungswerkzeugs gesenkt und bei sinkender Leistungsaufnahme erhöht wird.

Nachstehend ist die Erfindung anhand eines bevorzugten Ausführungsbeispiels unter Bezugnahme auf die beiliegende Zeichnung mit weiteren Einzelheiten näher erläutert. Dabei zeigen
- Fig. 1: ein Ausführungsbeispiel der erfindungsgemäßen Vorrichtung in einer Ansicht längs der Längsachse eines nachzuarbeitenden Rohres und
- Fig. 2: schematisch einen Schnitt durch die Vorrichtung nach Fig. 1 längs der Längsachse.

Die Zeichnung zeigt eine aus Armen 13, 14, 15 und 16 gebildete flexible Struktur 1, die über Rollen 17, 18, 19, 20 und 21 an einem Betonrohr 7 anliegt. An einander gegenüberliegenden Punkten 9 und 10 der flexiblen Struktur 1 sind Lenker 4, 4 angelenkt, die wiederum gelenkig mit einer Traverse 3 verbunden sind. Die Traverse 3 trägt einen Fräser 6.

In dem dargestellten Ausführungsbeispiel sind vier bogenförmige Arme 13, 14, 15 und 16 vorgesehen. Selbstverständlich ist auch jede andere Anzahl Arme denkbar. Je größer die Anzahl der Arme pro Längeneinheit bzw. je feiner der das Werkstück umschließende Bogen geteilt ist, um so genauer kann die Außenkontur des Rohres von der flexiblen Struktur nachgebildet werden. Mit der Anzahl der bogenförmigen Arme gegebener Länge ist aber auch eine Anpassung an verschiedene Rohrdurchmesser möglich. In dem gezeigten Ausführungsbeispiel fällt die Mitte 12 zwischen den Punkten 9 und 10 nicht exakt mit der Rohrmitte 11 zusammen. Dies hat keinen Einfluß auf die Genauigkeit der herzustellenden Rundform.

Die flexible Struktur 1 ist mit Federn 5,5 in Richtung eines Schließens um bzw. Anschmiegens an die Mantelfläche des Rohres 7 vorgespannt. Zum Drehen des Rohres 7 dienen Rollen 8,8.

Die Funktionsweise der in der Zeichnung dargestellten Rohrfräse ist folgendermaßen:
Das Rohr 7 wird mittels der Rollen 8 angetrieben, so daß es sich um seine Mitte 11 dreht. Die mittels der Federn 5,5 um das Rohr 7 vorgespannte flexible Struktur schmiegt sich dabei in jeder Stellung an das Rohr an. Dabei bleibt die Stellung der Punkte 9 und 10 bezüglich einer Ebene durch die Mitte 12 beziehungsweise durch die Rohrmitte 11 konstant. Über die Lenker 4,4 und die Traverse 3 bleibt damit auch die Stellung des Fräsers 6 gegenüber der Rohrmitte 11 konstant. Der Fräser 6 wird daher das Rohr rundfräsen.

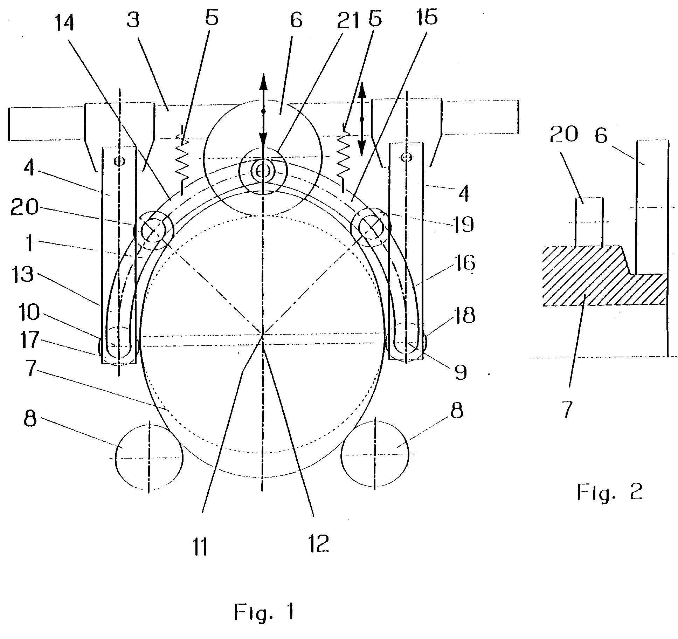

Wie Fig. 2 zeigt, wird in aller Regel nur das sogenannte Spitzende des Rohres 7 rundgefräst. Selbstverständlich kann die Erfindung aber auch zum kompletten Rundfräsen von Rohren und zum Nacharbeiten von anderen Werkstücken Anwendung finden.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Vorrichtung zum Nacharbeiten eines Werkstücks (7), insbesondere eines Betonrohres, mit
- einer als flexible Struktur ausgebildeten Einrichtung (1) mit mindestens dem halben Umfang des Werkstücks (7) entsprechender Länge zum Anlegen an das Werkstück (7),
- einem Bearbeitungswerkzeug (6) und
- einer Halteeinrichtung (3, 4) für das Bearbeitungswerkzeug (6), die an der als flexible Struktur ausgebildeten Einrichtung (1) bei deren Anlage an dem Werkstück (7) an zwei einander im wesentlichen gegenüberliegenden Punkten (9, 10) angreift, derart, daß diese entlang der Mantelfläche voneinander einen dem halben Umfang entsprechenden Abstand haben, zum Halten des Bearbeitungswerkzeugs (6) in im wesentlichen konstantem Abstand von der Mitte (12) zwischen den Angriffspunkten (9, 10).

2. Vorrichtung nach Anspruch 1, dadurch gekennzeichnet, daß die als flexible Struktur ausgebildete Einrichtung (1) gelenkig miteinander verbundene Glieder (13, 14, 15, 16) beinhaltet.

3. Vorrichtung nach Anspruch 2, dadurch gekennzeichnet, daß die Glieder (13, 14, 15, 16) bogenförmige Arme sind.

4. Vorrichtung nach Anspruch 2, dadurch gekennzeichnet, daß die Glieder gerade Arme sind.

5. Vorrichtung nach einem der vorangehenden Ansprüche, dadurch gekennzeichnet, daß die als flexible Struktur ausgebildete Einrichtung (1) bei Anlage an dem Werkstück (7) das Werkstück zu 160° bis 190° umschlingt.

6. Vorrichtung nach einem der vorangehenden Ansprüche, gekennzeichnet durch Rollen (17, 18, 19, 20, 21) zum Abstützen der als flexible Struktur ausgebildeten Einrichtung (1) an dem Werkstück (7).

7. Vorrichtung nach einem der vorangehenden Ansprüche, dadurch gekennzeichnet, daß die Halteeinrichtung (3, 4) mindestens einen verschwenkbaren Lenker (4) aufweist.

8. Vorrichtung nach einem der vorangehenden Ansprüche, gekennzeichnet durch eine Einrichtung (5) zum Vorspannen der als flexible Struktur ausgebildeten Einrichtung (1) in Richtung eines Schließens um das Werkstück (7).

9. Vorrichtung nach einem der vorangehenden Ansprüche, dadurch gekennzeichnet, daß das Bearbeitungswerkzeug (6) relativ zur Halteeinrichtung (3, 4) verstellbar ist.

10. Vorrichtung nach einem der vorangehenden Ansprüche, dadurch gekennzeichnet, daß das Bearbeitungswerzeug (6) ein Fräser ist.

11. Vorrichtung nach einem der vorangehenden Ansprüche, gekennzeichnet durch eine Antriebseinrichtung (8) zur Erzeugung einer Relativbewegung zwischen dem Bearbeitungswerkzeug (6) und dem Werkstück (7).

12. Verfahren zum Nacharbeiten eines Werkstücks (7), insbesondere eines Betonrohres, bei dem
- eine als flexible Struktur ausgebildete Einrichtung (1) mit mindestens dem halben Umfang des Werkstücks (7) entsprechender Länge an das Werkstück (7) angelegt wird,
- ein Bearbeitungswerkzeug (6) in im wesentlichen konstantem Abstand von der Mitte (12) zwischen zwei bei Anlage an dem Werkstück (7) einander gegenüberliegenden Punkten (9, 10) an der als flexible Struktur ausgebildeten Einrichtung (1) mit dem Werkstück (7) in Eingriff gebracht wird, wobei die gegenüberliegenden Punkte (9, 10) entlang der Mantelfläche voneinander einen dem halben Umfang entsprechenden Abstand haben, und
- eine Relativbewegung zwischen dem Werkstück (7) und dem Bearbeitungswerkzeug (6) erzeugt wird.

13. Verfahren nach Anspruch 12, dadurch gekennzeichnet, daß die Geschwindigkeit der Bearbeitung des Werkstücks (7) mit dem Bearbeitungswerkzeug (6) bei steigender Leistungsaufnahme des Bearbeitungswerkzeugs (6) gesenkt und bei sinkender Leistungsaufnahme erhöht wird.
